# EUROPEAN PATENT SPECIFICATION

(11) **EP 1 618 784 B1**
(45) Date of publication and mention of the grant of the patent: **22.06.2016**
(21) Application number: 04726884.2
(22) Date of filing: 12.04.2004
(51) Int. Cl.: A01N 25/04, A01N 43/54, A01N 47/38, A01N 37/36, A01P 13/02

(54) **AQUEOUS AGRICULTURAL-CHEMICAL SUSPENSION COMPOSITION**
WÄSSRIGE LANDWIRTSCHAFTLICH/ CHEMISCHE SUSPENSIONSZUSAMMENSETZUNG
COMPOSITION DE SUSPENSION CHIMIQUE AGRICOLE AQUEUSE

(30) Priority: 17.04.2003 JP 2003113121
(43) Date of publication of application: 25.01.2006
(73) Proprietor: KUMIAI CHEMICAL INDUSTRY CO., LTD., Taito-ku Tokyo 110-8782 (JP)
(72) Inventor: FUJITA, Shigeki KUMIAI CHEMICAL INDUSTRY CO., LTD., Taito-ku, Tokyo 1108782 (JP)
(74) Representative: Boult Wade Tennant
(86) International application number: PCT/JP2004/005193
(87) International publication number: WO 2004/091295

(56) References cited:
- EP-A2- 0 124 295
- WO-A1-01/13724
- FR-A- 1 408 238
- JP-A- 10 087 403
- JP-A- 59 205 305
- JP-A- 2001 151 604

## Description

### Technical Field

The invention relates to an aqueous agrochemical suspension composition containing an agrochemically active ingredient having a relatively high solubility in water, and a method for the preparation thereof.

### Background Art

Agrochemical compositions are currently known in the forms of granules, powders, emulsions, hydrates, aqueous suspensions and granular hydrates. The aqueous suspension has been widely used among these compositions due to the advantages that it can be readily measured for preparing a sprinkling solution, there is no scattering of powders, and the base suspension without dilution can be directly sprinkled over paddy fields.

While an aqueous suspension is usually prepared by uniformly dispersing an agrochemically active ingredient in an aqueous solution comprising water, a surfactant and a thickening agent, the component is required to have a stable quality without decomposition during storage, growth of particles and formation of a hardly restorable hard caking layer since the suspension is often stored for several years in circulation processes. It is usually necessary that the agrochemically active ingredient has a low solubility in water for formulating agrochemicals as an aqueous suspension, and the agrochemically active ingredient having a high solubility in water could not be formulated into an aqueous suspension since particles are remarkably grown with time.

On the other hand, it is disclosed that an art for formulating an aqueous suspension of a sulfonylurea herbicide being unstable in the aqueous suspension, wherein stability of the component of the sulfonylurea herbicide is improved by adjusting the pH in the range of 6 to 10 by adding a carboxylic acid salt or an inorganic acid salt in the range of 10 to 40% in the aqueous phase of the composition so as to prevent the particles from growing (Official Publication of Japanese Patent Kokai No. 59-205305). However, the effect of the surfactant cannot be exhibited due to high concentrations of salts contained, while this method involves environmental problems since the amount of the agrochemically active ingredient sprinkled becomes larger than the predetermined amount when the agrochemical is measured based on the volume since the specific gravity of the composition increases about 30%. It is disclosed that an art in which the component of the sulfonylurea herbicide is stabilized by reducing the pH-dependent solubility of the sulfonylurea herbicide in water by adjusting the pH of the aqueous suspension of the sulfonylurea herbicide to 6 or less by adding an acid or a buffering agent (Official Publication of Japanese Patent Kokai No. 5-105606). A composition with further additional of a fatty acid ester is disclosed (Official Publication of Japanese Patent Kokai No. 2000-95620). However, all of the prior art technologies are related to compositions of the aqueous suspensions of the sulfonylurea herbicide having a pH-dependent solubility in water, and stability of the herbicide is not sufficient for long term storage when the solubility in water is reduced by adjusting the pH of the suspension since the pH is out of the stable pH range of the sulfonylurea herbicide. While these arts disclose that it is possible to add various active herbicide components in the composition in addition ot the sulfonylurea herbicide, it was quite impossible to conjecture suspension states of these active herbicide components in the composition.

EP 0124295 discloses an aqueous composition of a herbicidal sulfonylurea derivative or agriculturally suitable salt thereof stabilised by an agriculturally suitable salt of a carboxylic or inorganic acid, present in a proportion of at least 3%.

FR 1408238 discloses concentrated herbicidal compositions which can be easily diluted with water to form stable free-flowing fluids. The compositions are concentrated aqueous herbicidal suspensions having a pH between 6.5 and 9.5 and comprising at least 5% by weight of water, from 2% to 70% by weight of one or more water-insoluble organic herbicides, from 1% to 50% by weight of one or more water-soluble organic herbicides and a suspending agent.

### Disclosure of the Invention

The object of the present invention is to provide a stable agrochemical aqueous suspension composition suitable for long-term storage due to content of an agrochemically active ingredient having relatively high water solubility to suppress particle growth with time as well as a preparation method thereof.

The inventor of the invention has studied an aqueous agrochemical suspension composition containing an agrochemically active ingredient which has a relatively high solubility in water or, in particular, an agrochemically active ingredient which is solid at room temperature and has a solubility in water of at least 2 g/100 ml at 20°C, and a method for the preparation thereof. As a result, the inventor of the invention has completed the invention by finding that the agrochemical composition in a form of an aqueous suspension is stable without noticeable particle growth with time, wherein, in the aqueous agrochemical suspension composition, a specified water-soluble substance is blended as an essential component, and a solubility of the agrochemically active ingredient at 20°C is adjusted to be smaller than 2 g/100 ml in an aqueous solution of the composition having a given compounding proportion between the specified substances and water in the composition.

Thus, according to the invention, the following inventions are provided.
(1) An aqueous agrochemical suspension composition which contains:
   (A) bispyribac-sodium which is solid at room temperature and has a solubility in water of at least 2 g/100 ml at 20°C;
   (B) at least one kind of a water-soluble compound selected from the group consisting of; (B1) inorganic acids selected from hydrochloric acid, sulfuric acid, phosphoric acid, nitric acid and boric acid; (B2) salts of an inorganic acid selected from the group consisting of alkali metal salts selected from disodium hydrogenphosphate, sodium sulfate, potassium sulfate, sodium nitrate, sodium carbonate, sodium hydrogen carbonate, sodium chloride, potassium chloride and sodium borate, alkaline earth metal salts selected from calcium chloride and magnesium chloride and ammonium salts selected from ammonium sulfate and ammonium nitrate; (B3) organic acids selected from the group consisting of acetic acid, citric acid, maleic acid, fumaric acid and tartaric acid; (B4) salts of the organic acid selected from the group consisting of alkali metal salts selected from sodium acetate, sodium tartarate and sodium citrate, alkaline earth metal salts and ammonium salts of the organic acid; and (B5) sodium hydroxide; and
   (C) water,
   the component (A) having a solubility at 20° C of smaller than 2 g/100 ml in an aqueous solution of the component (B) of which the compounding proportion of the component (B) and water is same as that in the composition.
(2) The aqueous agrochemical suspension composition according to (1) above in which the component (A) has a solubility in water of 2 to 80 g/100 ml at 20 °C.
(3) The aqueous agrochemical suspension composition according to (1) above in which the component (A) has a solubility in water of 3 to 70 g/100 ml at 20° C.
(4) The aqueous agrochemical suspension composition according to (1) above in which the component (A) has a solubility in water of 3 to 10 g/100 ml at 20° C.
(5) The aqueous agrochemical suspension composition according to either one of (1) to (4) above in which the compounding amount of the component (B) is in the range of 0.1 to 10 parts by mass per 100 parts by mass of the overall amount of the agrochemical composition.
(6) A method for the preparation of an aqueous agrochemical suspension composition which includes the steps of:
   preparing an aqueous solution by dissolving, in water, (B) at least one kind of a water-soluble compound selected from the group consisting of (B1) inorganic acids selected from hydrochloric acid, sulfuric acid, phosphoric acid, nitric acid and boric acid; (B2) salts of an inorganic acid selected from the group consisting of alkali metal salts selected from disodium hydrogenphosphate, sodium sulfate, potassium sulfate, sodium nitrate, sodium carbonate, sodium hydrogen carbonate, sodium chloride, potassium chloride and sodium borate, alkaline earth metal salts selected from calcium chloride and magnesium chloride and ammonium salts selected from ammonium sulfate and ammonium nitrate; (B3) organic acids selected from the group consisting of acetic acid, citric acid, maleic acid, fumaric acid and tartaric acid; (B4) salts of the organic acid selected from the group consisting of alkali metal salts selected from sodium acetate, sodium tartarate and sodium citrate, alkaline earth metal salts and ammonium salts of the organic acid; and (B5) sodium hydroxide;
   adding, to the aqueous solution, (A) bispyribac-sodium which is solid at room temperature and has a solubility in water of at least 2 g/100 ml at 20° C; and
   dispersing the component (A) into the aqueous solution by mixing or agitating the aqueous solution or by grinding the component (A).

Incidentally, a solubility in water, in the invention, means a solubility in pure water.

### Best Mode for Practicing of the Invention

In the following, the present invention is described in detail.

The bispyribac-sodium used as the component (A) in the agrochemical composition is a solid substance at room temperature and has a solubility in water at 20°C (hereinafter referred to as, simply, solubility in water) of at least 2 g/100 ml, preferably, 2 to 80 g/100 ml or, more preferably, 3 to 70 g/100 ml or, inter alia, 3 to 10 g/100 ml.

The agrochemically active ingredient can be used as a mixture of two kinds or more. At least one of the agrochemically active ingredients is bispyribac-sodium which is solid at room temperature and has a solubility in water of at least 2 g/100 ml at 20 °C when a plurality of agrochemically active ingredients are used. A combination of bispyribac-sodium which is solid at room temperature and has a solubility in water of at least 2 g/100 ml at 20°C, and an agrochemically active ingredient having a solubility in water of smaller than 2 g/100 ml at 20° C, or agrochemically active ingredients being liquid at room temperature can be used. The content of the agrochemically active ingredient is usually 5 to 60 parts by mass per 100 parts by mass of the overall amount of the agrochemical composition of the present invention.

The water-soluble compounds used as the component (B) in the agrochemical composition are substances other than the agrochemically active ingredients and are exemplified by water-soluble substances with molecular weights of 1000 or less, preferably, 500 or less and more preferably 300 or less. Component (B) compounds are selected from inorganic acids selected from hydrochloric acid, sulfuric acid, phosphoric acid, acetic acid, nitric acid and boric acid; alkali metal salts of an inorganic acid selected from disodium hydrogenphosphate, sodium sulfate, potassium sulfate, sodium nitrate, sodium carbonate, sodium hydrogencarbonate, sodium chloride, potassium chloride and sodium borate; alkaline earth metal salts of an inorganic acid selected from calcium chloride and magnesium chloride; ammonium salts of an inorganic acid selected from ammonium sulfate, ammonium nitrate; organic acids selected from acetic acid, citric acid, maleic acid, fumaric acid and tartaric acid; salts of the organic acid selected from alkali metal salts selected from sodium acetate, sodium tartarate and sodium citrate, alkaline earth metal salts and ammonium salts of the organic acid; and sodium hydroxide. The water-soluble compounds can be used singly or as a combination of at least two of them, among which selection of combinations having a buffer action such as disodium hydrogenphosphate and citric acid, sodium acetate and hydrochloric acid, sodium acetate and acetic acid, tartaric acid and sodium tartarate, boric acid and sodium borate, and sodium carbonate and sodium hydrogencarbonate is preferably used for preventing pH changes of the composition with time.

Regarding the water-soluble compound as the component (B), the kinds and compounding amounts of the component (B) are adequately adjusted in such a way that the component (A) has a solubility at 20°C of smaller than 2 g/100 ml in an aqueous solution of the component (B) of which the compounding proportion of the component (B) and water is same as that in the agrochemical composition of the present invention, i.e. the compounding proportion of the component (B) and (C) water in the composition.

While the method for measuring the solubility of component (A) in the aqueous solution of the water-soluble compound as the component (B) is not particularly limitative, the method contains, for example, adding an excess amount of the agrochemically active ingredient in an aqueous solution in which given quantities of the water-soluble compound are dissolved in water, filtering the solution with a membrane filter after stirring at room temperature for several hours, and analyzing the concentration in the filtrate according to an analysis method of the respective agrochemically active ingredients to calculate the solubility. The concentrations of the water-soluble compounds for allowing the solubility of the respective agrochemically active ingredients to be smaller than 2 g/100 ml are determined in the invention by preparing aqueous solutions with different concentrations of variety of the component (B) such as an inorganic acid, the specified organic acid and alkali metal salt and ammonium salt thereof and by measuring the solubility of the agrochemically active ingredient in each aqueous solution.

The compounding amount of the water-soluble compound as the component (B) is usually 0.1 to 10 parts by mass per 100 parts by mass of the overall amount of the agrochemical composition. A compounding amount exceeding 10 parts by mass is not preferable since the specific gravity of the aqueous agricultural suspension composition becomes so large, and not only chemical damages may be resulted due to excess distribution dose of the agrochemically active ingredient in the customary way of agrochemical distribution in which the amount of distribution per unit area is weighed based on the volume of the agrochemicals but also the load on the environment increases. The solubility of the bispyribac-sodium as the component (A) is not decreased to smaller than 2 g/100 ml when the compounding amount is smaller than 0.1 part by mass.

The aqueous agrochemical suspension composition of the invention usually contains a surfactant. While the surfactant is not particularly limitative, anionic and nonionic surfactants usually blended in an aqueous agrochemical suspension composition may be used. Examples of them include; nonionic surfactants such as polyethyleneglycol higher fatty acid ester, polyoxyethylene alkyl ether, polyoxyethylene alkylaryl ether, polyoxyethylene arylphenyl ether, sorbitan monoalkylate, acetylene alcohol and acetylenediol, and alkyleneoxide adducts thereof; anionic surfactants such as alkylaryl sulfonate, dialkyl sulfonate, lignin sulfonate, naphthalene sulfonate and condensates thereof, alkyl sulfate, alkyl phosphate, alkylaryl sulfate, alkylaryl phosphate, polyoxyethylene alkyl ether sulfate ester salt, polyoxyethylene alkylaryl ether sulfate, polyoxyethylene arylphenyl ether sulfate and polycarboxylic acid polymer surfactant; and silicone surfactants and fluorine surfactants.

The aqueous agrochemical suspension composition of the invention can contain auxiliary ingredients usually blended in an aqueous agrochemical suspension composition such as a thickening agent and freeze inhibitor. Examples of the thickening agent include carboxymethyl cellulose, xanthan gum, fumed silica filler, bentonite and smectite, and examples of the freeze inhibitor include glycols such as ethyleneglycol and propyleneglycol, and water-soluble salts. However, the thickening agent and freeze inhibitor are not particularly limitative thereto.

Preparation of the aqueous agrochemical suspension composition of the invention is conducted by dissolving the water-soluble compound as the component (B) in water, and by adding, to the aqueous solution, the bispyribac-sodium as the component (A), which is in advance pulverized with a dry grinding machine such as an impact grinding machine and high speed air grinding machine, and a surfactant or an auxiliary ingredient, according to need, and dispersing same by mixing or agitating; or by adding and mixing, to the above-mentioned aqueous solution, the bispyribac-sodium and a surfactant or an auxiliary ingredient, according to need, followed by agitating at a high speed with grinding media such as glass beads and grinding in a wet-process grinding machine to separate the grinding media.

While the best mode for practicing of the invention is described hereinafter with reference to examples, the invention is by no means limitative to these examples. "Parts" in the examples below represents "parts by mass".

### Example 1

An aqueous agrochemical suspension composition of the invention was obtained by adding and mixing, to an aqueous solution prepared by dissolving 1.6 parts of sodium hydrogencarbonate and 0.18 part of sodium carbonate in 46.77 parts of water, 40 parts of bispyribac-sodium as an agrochemically active ingredient, 1 part of polyoxyethylene styrylphenyl ether sulfate and 0.3 part of polyoxyethylene styrylphenyl ether as surfactants, 10 parts of propyleneglycol as an freeze inhibitor and 0.15 part of xanthan gum as a thickening agent followed by grinding by high-speed agitation in a wet-process grinding machine with glass beads as the grinding medium. The solubility of bispyribac-sodium (solubility in water: 7.3 g/100 ml) in the aqueous solution above was 1.4 g/100 ml.

### Example 2

An aqueous agrochemical suspension composition of the invention was obtained by adding and mixing, to an aqueous solution prepared by dissolving 3.9 parts of sodium hydrogencarbonate and 0.44 part of sodium carbonate in 74.16 parts of water, 10 parts of bispyribac-sodium as an agrochemically active ingredient, 1 part of polyoxyethylene styrylphenyl ether sulfate and 0.3 part of polyoxyethylene styrylphenyl ether as surfactants, 10 parts of propyleneglycol as an freeze inhibitor and 0.2 part of xanthan gum as a thickening agent followed by grinding by high speed agitation in a wet-process grinding machine with glass beads as the grinding medium. The solubility of bispyribac-sodium (solubility in water: 7.3 g/100 ml) in the aqueous solution above was 0.4 g/100 ml.

### Example 3

An aqueous agrochemical suspension composition of the invention was obtained by adding and mixing, to an aqueous solution prepared by dissolving 3.1 parts of sodium chloride in 75.4 parts of water, 10 parts of bispyribac-sodium as an agrochemically active ingredient, 1 part of polyoxyethylene styrylphenyl ether sulfate and 0.3 part of polyoxyethylene styrylphenyl ether as surfactants, 10 parts of propyleneglycol as an freeze inhibitor and 0.2 part of xanthan gum as a thickening agent followed by grinding by high speed agitation in a wet-process grinding machine with glass beads as a grinding medium. The solubility of bispyribac-sodium (solubility in water: 7.3 g/100 ml) in the aqueous solution above was 0.6 g/100 ml.

### Example 4

An aqueous agrochemical suspension composition of the invention was obtained by adding and mixing, to an aqueous solution prepared by dissolving 3.1 parts of ammonium hydrogencarbonate in 75.4 parts of water, 10 parts of bispyribac-sodium as an agrochemically active ingredient, 1 part of polyoxyethylene styrylphenyl ether sulfate and 0.3 part of polyoxyethylene styrylphenyl ether as surfactants, 10 parts of propyleneglycol as an freeze inhibitor and 0.2 part of xanthan gum as a thickening agent followed by grinding by high speed agitation in a wet-process grinding machine with glass beads as the grinding medium. The solubility of bispyribac-sodium (solubility in water: 7.3 g/100 ml) in the aqueous solution above was 0.9 g/100 ml.

### Example 5 (not according to the invention)

An aqueous agrochemical suspension composition of the invention was obtained by adding and mixing, to an aqueous solution prepared by dissolving 0.23 part of acetic acid and 2.8 parts of sodium acetate in 73.77 parts of water, 20 parts of flucarbazone-sodium as an agrochemically active ingredient, 2 parts of polyoxyethylene styrylphenylether sulfate and 1 part of dodecylbenzene sulfonate as surfactants, and 0.2 part of xanthan gum as a thickening agent followed by grinding by high speed agitation in a wet-process grinding machine with glass beads as the grinding medium. The solubility of flucarbazone-sodium (solubility in water: 4.4 g/100 ml) in the aqueous solution above was 1.1 g/100 ml.

### Comparative Example 1

An aqueous agrochemical suspension composition was obtained by adding and mixing 78.5 parts of water, 10 parts of bispyribac-sodium as an agrochemically active ingredient, 1 part of polyoxyethylene styrylphenyl ether sulfate and 0.3 part of polyoxyethylene styrylphenyl ether as surfactants, 10 parts of propyleneglycol as an freeze inhibitor and 0.2 part of xanthan gum as a thickening agent, followed by grinding by high speed agitation in a wet-process grinding machine with glass beads as the grinding medium. The solubility of bispyribac-sodium in water in the agrochemical composition was 7.3 g/100 ml.

### Comparative Example 2

An aqueous agrochemical suspension composition was obtained by adding and mixing, to an aqueous solution prepared by dissolving 1.4 parts of sodium hydrogencarbonate and 0.16 part of sodium carbonate in 76.94 parts of water, 10 parts of bispyribac-sodium as an agrochemically active ingredient, 1 part of polyoxyethylene styrylphenyl ether sulfate and 0.3 part of polyoxyethylene styrylphenyl ether as surfactants, 10 parts of propyleneglycol as a freeze inhibitor and 0.2 part of xanthan gum as a thickening agent followed by grinding by high-speed agitation in a wet-process grinding machine with glass beads as the grinding media. The solubility of bispyribac-sodium (solubility in water: 7.3 g/100 ml) in the aqueous solution above was 3 g/100 ml.

### Test Example

About 180 ml of the aqueous agrochemical suspension compositions in Examples 1 to 5 and Comparative Examples 1 and 2 were contained in plastic vessels with a diameter of 4.5 cm and a height of 12 cm, and were stored at 40 °C for 1 to 3 months and at room temperature for 1 year. Ten vessels were prepared for each sample subjected to the test.

### (Measurement of viscosity)

The viscosity of each sample was measured using a B-type viscometer (manufactured by Tokyo Keiki Co.) equipped with a rotor No. 2 at 30 r.p.m. The results are shown in Table 1.

### (Measurement of separation)

The overall height of the aqueous agrochemical suspension composition contained in the vessel and the height of the supernatant were measured with a vernier caliper after every one of the specified terms. As compared with Comparative Examples 1 to 2, the supernatant was little to indicate less separation. The results are shown in Table 1.

**Table 1**

| | Viscosity | Separation* | | | |
|---|---|---|---|---|---|
| | | 40 ° C 1 Month | 40 °C 2 Months | 40 °C 3 Months | Room Temp. 1 Year |
| Example 1 | 520 mPa·s | 5/112 | 6/112 | 14/112 | 15/112 |
| Example 2 | 545 mPa·s | 4/111 | 8/111 | 12/111 | 10/114 |
| Example 3 | 563 mPa·s | 3/112 | 7/112 | 10/112 | 15/111 |
| Example 4 | 490 mPa·s | 2/112 | 5/112 | 14/112 | 17/112 |
| Example 5 | 495 mPa·s | 3/112 | 4/112 | 9/112 | 18/111 |
| Comparative Example 1 | 552 mPa·s | 22/112 | 38/112 | 52/112 | 44/111 |
| Comparative Example 2 | 525 mPa·s | 16/112 | 24/112 | 37/112 | 32/111 |

| | | | | | |
|---|---|---|---|---|---|
| *: height of supernatant (mm)/height of overall liquid (mm) | | | | | |

### (Confirmation of deposition layer)

After the end of every specified term, the aqueous agrochemical suspension composition contained in the vessel was discharged by decantation followed by confirmation of presence of a deposition layer on the bottom by using a glass rod. While no deposition layer was found in Examples 1 to 5, a deposition layer was confirmed in Comparative Examples 1 and 2. The results are shown in Table 2.

**Table 2**

| | 40 °C 1 Month | 40 °C 2 Months | 40 °C 3 Months | Room Temp. 1 Year |
|---|---|---|---|---|
| Example 1 | - | - | - | - |
| Example 2 | - | - | - | - |
| Example 3 | - | - | - | - |
| Example 4 | - | - | - | - |
| Example 5 | - | - | - | - |
| Comparative Example 1 | + | ++ | ++ | ++ |
| Comparative Example 2 | - | ± | + | + |

| | | | | |
|---|---|---|---|---|
| Criterion of judgment: -: no deposition layer is observed ±: deposition layer is slightly observed +: deposition layer is observed ++: thick deposition layer is observed | | | | |

### (Measurement of average particle diameter)

After thoroughly shaking the vessel containing the aqueous agrochemical suspension composition, a part of the suspension was sampled to measure the average particle diameter of the agrochemically active ingredient suspended in the composition using a laser diffraction particle diameter distribution analyzer (Model LMS-24 manufactured by Seishin Enterprise Co.). The dispersant used for measuring the average particle diameter was a saturated aqueous solution of the agrochemically active ingredient. While there was almost no increase of the average particle diameter in Examples 1 to 5, a remarkable increase of the particle diameter was noted in Comparative Examples 1 and 2. The results are shown in Table 3.

**Table 3**

| | After preparation | 40 °C 1 Month | 40 °C 2 Months | 40 °C 3 Months | Room Temp. 1 Year |
|---|---|---|---|---|---|
| Example 1 | 2.8 µm | 3.2 µm | 3.6 µm | 3.8 µm | 3.5 µm |
| Example 2 | 2.6 µm | 2.8 µm | 3.1 µm | 3.4 µm | 3.3 µm |
| Example 3 | 2.8 µm | 3.0 µm | 3.3 µm | 3.5 µm | 3.5 µm |
| Example 4 | 2.9 µm | 3.1 µm | 3.4 µm | 3.6 µm | 3.6 µm |
| Example 5 | 3.0 µm | 3.3 µm | 3.5 µm | 3.7 µm | 3.6 µm |
| Comparative Example 1 | 3.2 µm | 7.2 µm | 8.3 µm | 9.1 µm | 8.8 µm |
| Comparative Example 2 | 2.8 µm | 4.9 µm | 5.6 µm | 6.3 µm | 5.9 µm |

### Industrial Applicability

While the aqueous agrochemical suspension composition of the invention contains a highly water-soluble agrochemically active ingredient, separation and formation of a deposited layer are suppressed during storage enabling a long-term storage by virtue of little occurrence of particle growth with time.

## Claims

1. An aqueous agrochemical suspension composition which contains:
(A) bispyribac-sodium which is solid at room temperature and has a solubility in water of at least 2 g/100 ml at 20°C;
(B) at least one kind of a water-soluble compound selected from the group consisting of;
(B1) inorganic acids selected from hydrochloric acid, sulfuric acid, phosphoric acid, nitric acid and boric acid;
(B2) salts of an inorganic acid selected from the group consisting of alkali metal salts selected from disodium hydrogenphosphate, sodium sulfate, potassium sulfate, sodium nitrate, sodium carbonate, sodium hydrogen carbonate, sodium chloride, potassium chloride and sodium borate, alkaline earth metal salts selected from calcium chloride and magnesium chloride and ammonium salts selected from ammonium sulfate, and ammonium nitrate;
(B3) organic acids selected from the group consisting of acetic acid, citric acid, maleic acid, fumaric acid and tartaric acid;
(B4) salts of the organic acid selected from the group consisting of alkali metal salts selected from sodium acetate, sodium tartarate and sodium citrate, alkaline earth metal salts and ammonium salts of the organic acid; and
(B5) sodium hydroxide;
and
(C) water,
the component (A) having a solubility at 20°C of smaller than 2 g/100 ml in an aqueous solution of the component (B) of which the compounding proportion of the component (B) and water is the same as that in the composition.

2. The aqueous agrochemical suspension composition according to claim 1 in which the compounding amount of the component (B) is in the range of 0.1 to 10 parts by mass per 100 parts by mass of the overall amount of the agrochemical composition.

3. A method for the preparation of an aqueous agrochemical suspension composition which includes the steps of:
preparing an aqueous solution by dissolving, in water (B) at least one kind of a water-soluble compound selected from the group consisting of
(B1) inorganic acids, selected from hydrochloric acid, sulfuric acid, phosphoric acid, nitric acid and boric acid;
(B2) salts of an inorganic acid selected from the group consisting of alkali metal salts, selected from disodium hydrogenphosphate, sodium sulfate, potassium sulfate, sodium nitrate, sodium carbonate, sodium hydrogen carbonate, sodium chloride, potassium chloride and sodium borate, alkaline earth metal salts, selected from calcium chloride and magnesium chloride and ammonium salts, selected from ammonium sulfate, and ammonium nitrate;
(B3) organic acids selected from the group consisting of acetic acid, citric acid, maleic acid, fumaric acid and tartaric acid;
(B4) salts of the organic acid selected from the group consisting of alkali metal salts selected from sodium acetate, sodium tartarate and sodium citrate, alkaline earth metal salts and ammonium salts of the organic acid;and
(B5) sodium hydroxide;
adding, to the aqueous solution, (A) bispyribac-sodium, which is solid at room temperature and has a solubility in water of at least 2 g/100 ml at 20°C; and
dispersing the component (A) into the aqueous solution by agitating the aqueous solution or by grinding the component (A).

## Patentansprüche

1. Wässrige agrochemische Suspensionszusammensetzung, die enthält:
(A) Bispyribac-Natrium, welches bei Raumtemperatur fest ist und eine Löslichkeit in Wasser von mindestens 2 g/100 ml bei 20°C aufweist;
(B) mindestens eine Art von wasserlöslicher Verbindung, die ausgewählt ist aus der Gruppe bestehend aus:
(B1) anorganischen Säuren, die ausgewählt sind aus Salzsäure, Schwefelsäure, Phosphorsäure, Salpetersäure und Borsäure;
(B2) Salzen einer anorganischen Säure, ausgewählt aus der Gruppe bestehend aus Alkalimetallsalzen, die ausgewählt sind aus Dinatriumhydrogenphosphat, Natriumsulfat, Kaliumsulfat, Natriumnitrat, Natriumcarbonat, Natriumhydrogencarbonat, Natriumchlorid, Kaliumchlorid und Natriumborat, Erdalkalimetallsalzen, die ausgewählt sind aus Calciumchlorid und Magnesiumchlorid, und Ammoniumsalzen, die ausgewählt sind aus Ammoniumsulfat und Ammoniumnitrat;
(B3) organischen Säuren, die ausgewählt sind aus der Gruppe bestehend aus Essigsäure, Zitronensäure, Maleinsäure, Fumarsäure und Weinsäure;
(B4) Salzen der organischen Säure, ausgewählt aus der Gruppe bestehend aus Alkalimetallsalzen, die ausgewählt sind aus Natriumacetat, Natriumtartrat und Natriumcitrat, Erdalkalimetallsalzen und Ammoniumsalzen der organischen Säure; und
(B5) Natriumhydroxid; und
(c) Wasser,
worin die Komponente (A) eine Löslichkeit bei 20°C von weniger als 2 g/100 ml in einer wässrigen Lösung der Komponente (B) aufweist, bei der das Mischungsverhältnis der Komponente (B) und Wasser das gleiche ist wie in der Zusammensetzung.

2. Wässrige, agrochemische Suspensionszusammensetzung gemäß Anspruch 1, worin das Mischungsverhältnis der Komponente (B) im Bereich von 0,1 bis 10 Masseteile je 100 Masseteile der Gesamtmenge der agrochemischen Zusammensetzung beträgt.

3. Verfahren zur Herstellung einer wässrigen agrochemischen Suspensionszusammensetzung, welches die Schritte umfasst:
Zubereiten einer wässrigen Lösung durch Auflösen in Wasser von
(B) mindestens einer Art von wasserlöslicher Verbindung, ausgewählt aus der Gruppe bestehend aus
(B1) anorganischen Säuren, die ausgewählt sind aus Salzsäure, Schwefelsäure, Phosphorsäure, Salpetersäure und Borsäure;
(B2) Salzen einer anorganischen Säure, ausgewählt aus der Gruppe bestehend aus Alkalimetallsalzen, die ausgewählt sind aus Dinatriumhydrogenphosphat, Natriumsulfat, Kaliumsulfat, Natriumnitrat, Natriumcarbonat, Natriumhydrogencarbonat, Natriumchlorid, Kaliumchlorid und Natriumborat, Erdalkalimetallsalzen, die ausgewählt sind aus Calciumchlorid und Magnesiumchlorid, und Ammoniumsalzen, die ausgewählt sind aus Ammoniumsulfat und Ammoniumnitrat;
(B3) organischen Säuren, die ausgewählt sind aus der Gruppe bestehend aus Essigsäure, Zitronensäure, Maleinsäure, Fumarsäure und Weinsäure;
(B4) Salzen der organischen Säure, ausgewählt aus der Gruppe bestehend aus Alkalimetallsalzen, die ausgewählt sind aus Natriumacetat, Natriumtartrat und Natriumcitrat, Erdalkalimetallsalzen und Ammoniumsalzen der organischen Säure; und
(B5) Natriumhydroxid;
Zugeben zu der wässrigen Lösung von (A) Bispyribac-Natrium, welches bei Raumtemperatur fest ist und eine Löslichkeit in Wasser von mindestens 2 g/100 ml bei 20°C aufweist; und
Verteilen der Komponente (A) in der wässrigen Lösung durch Rühren der wässrigen Lösung oder durch Mahlen der Komponente (A).

## Revendications

1. Composition de suspension agrochimique aqueuse qui contient :
(A) du bispyribac-sodium qui est solide à température ambiante et qui présente une solubilité dans l'eau d'au moins 2 g/100 ml à 20 °C ;
(B) au moins un type d'un composé soluble dans l'eau choisi dans le groupe constitué ;
(B1) des acides inorganiques choisis parmi l'acide chlorhydrique, l'acide sulfurique, l'acide phosphorique, l'acide nitrique et l'acide borique ;
(B2) des sels d'un acide inorganique choisis dans le groupe constitué des sels de métaux alcalins choisis parmi l'hydrogénophosphate de disodium, le sulfate de sodium, le sulfate de potassium, le nitrate de sodium, le carbonate de sodium, l'hydrogénocarbonate de sodium, le chlorure de sodium, le chlorure de potassium et le borate de sodium, des sels de métaux alcalino-terreux choisis parmi le chlorure de calcium et le chlorure de magnésium et des sels d'ammonium choisis parmi le sulfate d'ammonium et le nitrate d'ammonium ;
(B3) des acides organiques choisis dans le groupe constitué de l'acide acétique, de l'acide citrique, de l'acide maléique, de l'acide fumarique et de l'acide tartrique ;
(B4) des sels de l'acide organique choisis dans le groupe constitué des sels de métaux alcalins choisis parmi l'acétate de sodium, le tartrate de sodium et le citrate de sodium, des sels de métaux alcalino-terreux et des sels d'ammonium de l'acide organique ; et
(B5) de l'hydroxyde de sodium ;
et
(C) de l'eau,
le composant (A) présentant une solubilité à 20 °C inférieure à 2 g/100 ml dans une solution aqueuse du composant (B) dont la proportion de mélange du composant (B) et de l'eau est identique à celle de la composition.

2. Composition de suspension agrochimique aqueuse selon la revendication 1 dans laquelle la quantité de mélange du composant (B) se situe dans la plage de 0,1 à 10 parties en masse par 100 parties en masse de la quantité totale de la composition agrochimique.

3. Procédé de préparation d'une composition de suspension agrochimique aqueuse qui inclut les étapes suivantes :
préparation d'une solution aqueuse par dissolution, dans l'eau
(B) d'au moins un type d'un composé soluble dans l'eau choisi dans le groupe constitué
(B1) des acides inorganiques, choisis parmi l'acide chlorhydrique, l'acide sulfurique, l'acide phosphorique, l'acide nitrique et l'acide borique ;
(B2) des sels d'un acide inorganique choisis dans le groupe constitué des sels de métaux alcalins, choisis parmi l'hydrogénophosphate de disodium, le sulfate de sodium, le sulfate de potassium, le nitrate de sodium, le carbonate de sodium, l'hydrogénocarbonate de sodium, le chlorure de sodium, le chlorure de potassium et le borate de sodium, des sels de métaux alcalino-terreux, choisis parmi le chlorure de calcium et le chlorure de magnésium et des sels d'ammonium, choisis parmi le sulfate d'ammonium et le nitrate d'ammonium ;
(B3) des acides organiques choisis dans le groupe constitué de l'acide acétique, de l'acide citrique, de l'acide maléique, de l'acide fumarique et de l'acide tartrique ;
(B4) des sels de l'acide organique choisis dans le groupe constitué des sels de métaux alcalins choisis parmi l'acétate de sodium, le tartrate de sodium et le citrate de sodium, des sels de métaux alcalino-terreux et des sels d'ammonium de l'acide organique ; et
(B5) de l'hydroxyde de sodium ;
ajout, à la solution aqueuse, de (A) bispyribac-sodium, qui est solide à température ambiante et qui présente une solubilité dans l'eau d'au moins 2 g/100 ml à 20 °C ; et dispersion du composant (A) dans la solution aqueuse par agitation de la solution aqueuse ou par broyage du composant (A).
